# FASCICULE DE BREVET EUROPEEN

(11) **EP 0 497 639 B1**
(45) Date de publication et mention de la délivrance du brevet: **25.10.1995**
(21) Numéro de dépôt: 92400073.0
(22) Date de dépôt: 10.01.1992
(51) Int. Cl.: B60H 1/00

(54) **Dispositif de climatisation de l'habitacle d'un véhicule automobile**
Klimaanlage für Kraftfahrzeuginnenraum
Air conditioning for motor vehicle compartment

(30) Priorité: 30.01.1991 FR 9101054
(43) Date de publication de la demande: 05.08.1992
(73) Titulaire: AUTOMOBILES PEUGEOT, 75116 Paris (FR); AUTOMOBILES CITROEN, 92200 Neuilly-sur-Seine (FR)
(72) Inventeur: Desarthe, Jacques, F-91410 Dourdan (FR)
(74) Mandataire: Durand, Yves Armand Louis

(56) Documents cités:
- EP-A- 0 267 101
- EP-A- 0 296 556
- DE-A- 3 438 740
- DE-U- 8 126 754
- FR-A- 1 118 511
- FR-A- 2 381 449
- GB-A- 2 083 610
- PATENT ABSTRACTS OF JAPAN vol. 12, no. 257 (M-719)(3104) 20 Juillet 1988 & JP-A-63 041 226 (MAZDA MOTOR CORP.) 22 Féverier 1988
- PATENT ABSTRACTS OF JAPAN vol. 12, no. 274 (M-725)(3121) 29 Juillet 1988 & JP-A-63 057 315 (TECH. RES. ASSOC. OF AUTOMOB. APPLANCE) 12 Mars 1988
- TOUTE L' ELECTRONIQUE (TE) no. 526, Septembre 1987, PARIS,FRANCE pages 76 - 77; R. BESSON: 'LE CONTROLE DU CONDITIONNEMENT DE LA TEMPERATURE EN VOITURE GRACE AU MICROCONTROLEUR SAB 80515'

## Description

La présente invention se rapporte à un dispositif de climatisation de l'habitacle d'un véhicule automobile, et concerne plus particulièrement un mécanisme de régulation du débit d'air d'un tel dispositif.

On connaît depuis longtemps des dispositifs de climatisation constitués par plusieurs circuits d'amenée d'air conditionné, qui débouchent dans des ouies d'aération réparties dans l'habitacle. Généralement, ces dispositifs comprennent un échangeur thermique et un pulseur d'air relié à un boîtier d'admission dans lequel est prévu un volet de sélection permettant de raccorder le pulseur d'air soit à une prise d'air extérieur, soit un collecteur de recyclage de l'air de l'habitacle.

Ces dispositifs sont fréquemment équipés d'un calculateur relié à des capteurs sensibles à des paramètres de la climatisation, pour déterminer en fonction d'un programme et des informations fournies par les capteurs, des valeurs de consigne à appliquer à l'échangeur thermique, au volet de sélection et au pulseur, de façon à obtenir un réglage automatique de la température et du débit du dispositif.

Cependant, comme le programme est déterminé à la suite d'essais effectués à vitesse constante du véhicule, les valeurs de consigne ne prennent pas en compte les variations de débit dynamique qui sont liées aux changements de vitesse du véhicule, ce qui rend le réglage du débit difficile et imprécis, lorsque le véhicule se déplace à des vitesses différentes de la vitesse d'essai. Par ailleurs, puisque le volet de sélection fonctionne en tout ou rien - c'est-à-dire obture la prise d'air extérieur lorsque le collecteur de recyclage est raccordé au pulseur, et vice-versa - il est parfois nécessaire d'appliquer au moteur du pulseur une tension d'alimentation élevée pour obtenir la valeur de consigne du débit, alors que la vitesse du véhicule génère à elle seule un débit dynamique supérieur à la valeur de consigne.

On connaît également d'après le document GB-A-2 083 610 un dispositif de climatisation conforme au préambule de la revendication 1.

Par conséquent, l'invention a pour but de proposer un dispositif de climatisation économique qui permette d'ajuster le débit de façon simple et précise, tout en réduisant le plus possible la consommation d'énergie électrique, quelle que soit la vitesse du véhicule et les paramètres de climatisation.

A cet effet, l'invention a pour objet un dispositif de climatisation d'un habitacle de véhicule automobile, du type comprenant un pulseur d'air relié à différents circuits d'amenée d'air qui débouchent sur des ouies d'aération réparties dans l'habitacle pour fournir un air conditionné suivant des valeurs de consigne, des volets de sélection permettant l'ouverture ou l'obturation des circuits, et en particulier un premier volet pouvant obturer au moins partiellement une prise d'air extérieur, et un calculateur relié à des moyens sensibles à la vitesse du véhicule et à des moyens aptes à sélectionner les positions desdits volets afin d'ajuster la valeur de consigne du débit d'air suivant la vitesse du véhicule, caractérisé en ce que le calculateur est raccordé en outre à un deuxième volet permettant l'obturation ou l'ouverture d'un collecteur de recyclage, à un volet de mitigeage qui dirige le flux d'air pulsé soit vers un échangeur thermique soit vers une veine neutre et à des capteurs disposés dans lesdits circuits, pour déterminer les valeurs de consigne correspondant au débit d'air en fonction de la vitesse du véhicule et de paramètres de climatisation, en particulier la température.

On comprend déjà qu'avec le dispositif de climatisation conforme à l'invention, il est possible de prendre en compte les variations du débit dynamique liées à la vitesse du véhicule et ainsi de limiter au maximum l'utilisation du pulseur lorsque le débit dynamique est suffisant.

On précisera encore ici que les deux premiers volets de sélection sont associés par des moyens de commande agencés de sorte qu'en position d'ouverture et qu'en position d'obturation partielle du premier volet, le second volet est en position d'obturation, et qu'en position d'obturation du premier volet, le second volet est en position d'ouverture.

Le dispositif se caractérise encore en ce que les moyens de commande sont constitués de deux pignons et d'un pignon intermédiaire partiellement dentés, le premier pignon étant solidaire du premier volet et pouvant venir en prise avec un premier secteur denté du pignon intermédiaire, le second pignon étant solidaire du second volet et pouvant venir en prise avec un secteur denté du pignon intermédiaire, de sorte que le pignon intermédiaire peut engréner soit avec l'un ou l'autre, soit avec les deux pignons partiellement dentés simultanément.

Suivant une caractéristique particulière à l'invention, le pignon intermédiaire est relié à un micromoteur à l'aide d'une tringlerie articulée de façon à être entraîné en rotation par le micromoteur.

De plus, conformément à l'invention, les moyens de commande comprennent des organes élastiques aptes à maintenir les volets de sélection dans leurs positions d'obturation.

Selon encore une autre caractéristique de l'invention, chaque organe élastique est constitué par un ressort à lame fixé sur le pignon intermédiaire par l'une de ses extrémités, l'autre extrémité venant en appui contre un téton solidaire de l'un des premier et second pignons, lorsque le volet correspondant est en position d'obturation.

On précisera encore ici que le calculateur comporte une mémoire dans laquelle sont emmagasinées les variations du débit d'air pour les différentes valeurs de tension d'alimentation d'un moteur d'entraînement du pulseur, ainsi que du débit dynamique en fonction de la vitesse du véhicule, lorsque le premier volet de sélection d'admission est en position d'ouverture et d'obturation partielle.

Le dispositif se caractérise encore en ce qu'un programme de gestion emmagasiné dans la mémoire du calculateur permet d'une part la mise en position d'obturation partielle du premier volet lorsque la valeur du débit dynamique relative à la vitesse est égale à une valeur de consigne, et d'autre part de déterminer une tension d'alimentation du moteur du pulseur qui permet d'obtenir le débit de consigne lorsque le premier volet de sélection est en position d'obturation partielle.

Mais d'autres avantages et caractéristiques ressortiront mieux de la description d'un mode de réalisation de l'invention, donné uniquement à titre d'exemple, qui suit et se réfère aux dessins annexés dans lesquels :
La figure 1 représente de façon schématique l'avant d'un véhicule automobile équipé d'un dispositif de climatisation conforme à l'invention ;
La figure 2 est une vue partielle et schématique des volets de sélection de l'admission, représentés en position d'ouverture de l'entrée d'air extérieur ;
La figure 3 est une vue similaire à la figure 2, avec le premier volet représenté en position d'obturation partielle .
La figure 4 est une vue similaire aux figures 2 et 3, avec le premier volet en position d'obturation et le second volet en position d'ouverture du collecteur de recyclage .
La figure 5 est un graphique indiquant les valeurs du débit d'air et de la tension d'alimentation du pulseur en fonction de la vitesse du véhicule.

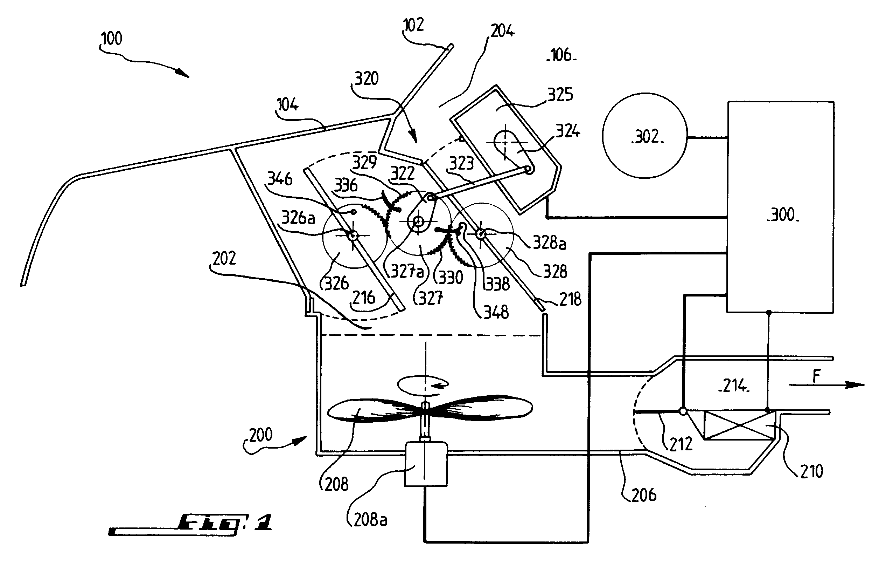

En se reportant tout d'abord à la figure 1, on voit la partie avant d'un véhicule automobile 100 qui comporte, par exemple à la base de son pare-brise 102, une prise d'air extérieur 104.

Un dispositif de climatisation 200 est raccordé, à l'aide d'un boîtier d'admission 202, à la prise d'air extérieur 104. Ce dispositif de climatisation 200 comporte plusieurs circuits d'amenée d'air qui débouchent dans diverses ouies d'aération (non représentées) réparties à l'intérieur d'un habitacle 106 du véhicule. La référence numérique 204 désigne un collecteur de recyclage de l'air de l'habitacle 106 qui débouche également dans le boîtier d'admission 202, à proximité de la prise d'air 104. Le dispositif de climatisation illustré comprend également un circuit principal 206 raccordé au boîtier d'admission 202, et dans lequel sont montés en série un ventilateur ou pulseur 208, ainsi qu'un échangeur thermique 210. Le pulseur 208 provoque la mise en circulation de l'air du boîtier d'admission 202 vers le dispositif 200 dans le sens indiqué par la flèche F sur la figure 1. On remarque également dans le circuit principal 206 un volet de sélection ou mitigeage 212, disposé entre le pulseur 208 et l'échangeur thermique 210, de façon à diriger le flux d'air pulsé F soit vers l'échangeur thermique 210, soit vers une veine neutre 214, selon sa position. L'échangeur thermique 210 peut être de tout type connu et permettant de faire varier la température du flux d'air qui est pulsé au travers de celui-ci.

Deux volets de sélection 216 et 218 sont disposés à l'intérieur du boîtier d'admission 202. Ces volets de sélection 216 et 218 permettent l'ouverture ou l'obturation de la prise d'air extérieur 104 et du collecteur de recyclage 204, respectivement.

On a représenté de façon schématique à droite sur la figure 1 un calculateur 300 qui est relié à un moteur d'entraînement 208a du pulseur 208, au volet mitigeur 212 et à l'échangeur thermique 210, de façon à transmettre à ces éléments du dispositif de climatisation 200 des valeurs de consigne déterminées à l'aide d'un programme emmagasiné dans une section de mémoire du calculateur 300, en fonction de paramètres de climatisation fournis par des capteurs (non représentés) tels que par exemple un capteur de température et des réglages effectués par un passager du véhicule.

Conformément à l'invention, des moyens sensibles à la vitesse du véhicule désignés par la référence 302 sont également reliés au calculateur 300, afin de permettre un ajustement de la valeur de consigne du débit d'air du dispositif 200 en fonction de la vitesse du véhicule. Ces moyens sensibles à la vitesse du véhicule 302 peuvent être d'un type quelconque approprié, et peuvent aussi être raccordés à d'autres systèmes de gestion du fonctionnement du véhicule tels que des systèmes de gestion du fonctionnement du moteur, de la direction assistée, de la suspension, par exemple.

Les volets de sélection 216 et 218 sont associés l'un à l'autre par des moyens de commande 320 qui sont raccordés au calculateur 300. Les moyens de commande 320 sont constitués principalement par un premier pignon 326 et un second pignon 328 partiellement dentés. Le premier pignon partiellement denté 326 est monté sur un axe de pivotement 326a disposé à l'intérieur du boîtier d'admission 202 et sur lequel le premier volet 216 est fixé. Similairement, le second pignon partiellement denté 328 est monté, avec le second volet 218, sur un axe de rotation 328a pivotant dans le boîtier 202. De cette manière, le premier et le second volets 216 et 218 sont solidaires en rotation du premier et du second pignon 326 et 328, respectivement.

Les moyens de commande 320 comprennent aussi un pignon intermédiaire 327 partiellement denté qui est interposé entre le premier et le second pignons. A l'instar des pignons 326 et 328, le pignon intermédiaire 327 est monté à rotation dans le boîtier 202 à l'aide d'un axe 327a et comporte un premier secteur denté 329 et un second secteur denté 330. Comme on l'expliquera plus en détail ultérieurement, le premier secteur 329 peut venir en prise avec le premier pignon 326 et le second secteur 330 peut venir en prise avec le second pignon 328, soit alternativement, soit simultanément.

Une tringlerie constituée par une came 322 fixée sur l'axe 327a du pignon 327, une tringle 323 articulée sur l'extrémité excentrée de la came 322, et une came 324 reliée à la tringle 323 par un pivot d'articulation, permet l'entraînement en rotation du pignon intermédiaire 327 par un micromoteur 325 dont est solidaire la came 324. On voit bien sur la figure 1 que les moyens de commande 320 sont reliés au calculateur 300 par l'intermédiaire du micromoteur 325, de façon à transmettre des signaux de mise en marche ou à l'arrêt.

On remarque sur la figure 1 que les moyens de commande 320 comprennent des organes élastiques 336 et 338 qui sont aptes à maintenir les volets dans leur position d'obturation.

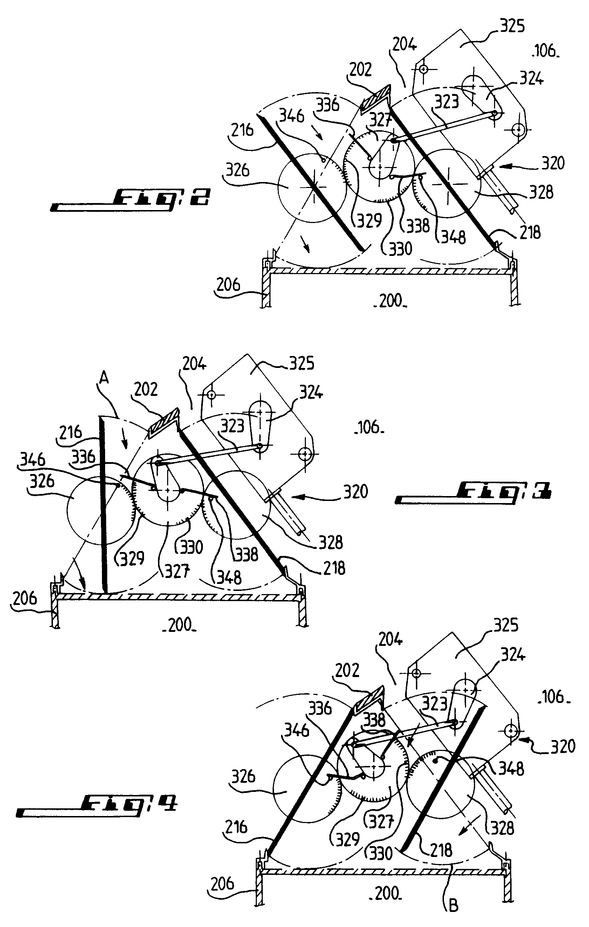

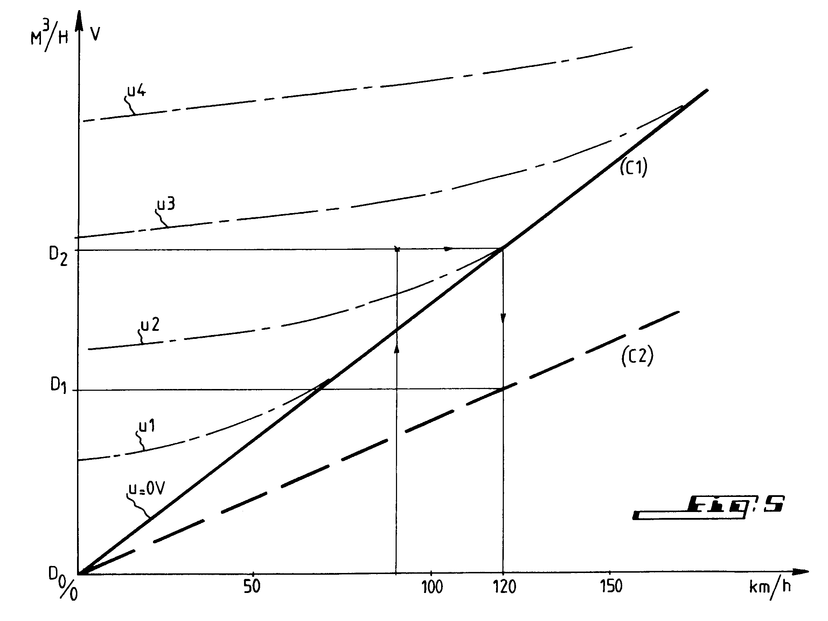

Chacun des organes élastiques 336 et 338 est constitué par un ressort à lame fixé par l'une de ses extrémités sur le pignon intermédiaire 327, et dont l'autre extrémité s'étend en saillie du pignon 327. Plus précisément, le ressort à lame 336 fait saillie du pignon 327 de façon à venir en appui contre un pion ou téton 346 solidaire du pignon 326, lorsque le volet 216 est en position d'obturation (figure 4). Similairement, le ressort à lame 338 fait saillie du pignon 327 de manière à venir exercer sur un téton 348 solidaire du pignon 328 un effort permettant de maintenir le volet 218 en position d'obturation.

Comme on va l'expliquer en se reportant aux figures 2 à 5, les secteurs dentés et les premier et second pignons 326, 328 sont agencés de sorte qu'en position d'ouverture ainsi que d'obturation partielle de la prise d'air extérieur 104 par le premier volet 216, le second volet 218 est placé en position d'obturation du collecteur de recyclage 204 (figures 2 et 3) alors qu'en position d'obturation de la prise d'air extérieur (figure 4) par le premier volet 216, le second volet 218 est en position d'ouverture du collecteur de recyclage 204.

La figure 2 représente un état du dispositif 200 suivant lequel l'admission d'air est effectuée grâce à la mise en communication de la prise d'air extérieur 104 et du pulseur 208, par l'ouverture totale du volet de sélection 216. Cette position du volet 216 correspond à la courbe C1 sur la figure 5. Le secteur denté 329 du pignon intermédiaire est en prise avec le pignon 326 et le ressort à lame 338 exerce sur le téton 348 du pignon 328 une sollicitation qui maintient le volet 218 dans sa position d'obturation du collecteur 204. Il va de soi que dans cette position, ainsi que dans celle illustrée sur la figure 3, le secteur denté 330 n'est pas en prise d'engrénement avec la partie dentée du deuxième pignon 328.

La figure 3 représente une position particulière à la présente invention dite d'obturation partielle de la prise d'air 104. En effet, on voit que le volet de sélection 216 est placé de sorte que son degré ou secteur d'ouverture A est réduit en comparaison avec celui qui est illustré sur la figure 2. Ainsi, le débit dynamique est limité, comme représenté par la courbe C2 sur la figure 5. Ici encore, le volet 218 est en position d'obturation.

La figure 4 illustre une position de recyclage de l'air de l'habitacle 106, suivant laquelle le volet de sélection 216 est plaqué, sous l'effet de l'organe élastique 336 et tandis que le secteur denté 329 n'est plus en prise avec le premier pignon 326, contre le boîtier d'admission 202 de façon à obturer la prise d'air extérieur 104. Le passage de la position de la figure 3 à celle de la figure 4 est rendu possible par l'engrénement du secteur denté 329 avec le pignon 326 et du secteur denté 330 avec le pignon 328, simultanément, ce qui provoque le pivotement des volets 216 et 218 autour de leurs axes de rotation respectifs, dans le sens horaire sur les figures. Alors, le volet de sélection 218 met en communication le pulseur 208 et le collecteur 204 en pivotant à l'intérieur du boîtier d'admission 202, ce qui laisse une voie de passage B pour l'air à recycler qui provient de l'habitacle 106.

Suivant un exemple illustré par le graphique de la figure 5, la position d'obturation partielle de la prise d'air extérieur 104 permet de réduire l'admission d'air extérieur dans le dispositif de climatisation 200 lorsque la vitesse du véhicule 100 est telle que le débit dynamique en position d'ouverture du volet 216 est supérieur à la valeur de consigne.

La courbe C1 représente le débit dynamique admis dans le dispositif 200 avec le pulseur 208 à l'arrêt et le volet 216 en position d'ouverture totale (figure 2). La courbe C2 représente les valeurs du débit dynamique admis, en fonction de la vitesse de déplacement du véhicule avec le volet de sélection 216 en position d'obturation partielle et le pulseur 208 à l'arrêt. Les tracés horizontaux D1 et D2 désignent les débits de consignes à obtenir dans l'habitacle, et les courbes u1, u2, u3 et u4 représentent des débits d'air sous différentes tensions d'alimentation du moteur du pulseur.

On comprend déjà qu'il est possible lorsque le débit dynamique C1 dépasse la valeur de consigne choisie (D1 ou D2, par exemple), de placer le volet 216 en position d'obturation partielle pour rejoindre la courbe C2, et d'alimenter le pulseur 208 sous une tension permettant d'atteindre à nouveau la valeur de consigne choisie. Ainsi, le débit dynamique peut être employé de façon optimale, pour diminuer au maximum la consommation de puissance électrique du dispositif, tout en garantissant un réglage précis de la valeur du débit.

Dans ce but, une section de mémoire (non représentée) du calculateur 300 contient des variations du débit d'air F pour les différentes valeurs (u1, u2, u3, u4) de tension d'alimentation du moteur 208a du pulseur 208, ainsi que les valeurs du débit dynamique en fonction de la vitesse du véhicule, lorsque le premier volet de sélection 216 est position d'ouverture (figure 2) et en position d'obturation partielle (figure 3).

Par ailleurs, le programme de gestion du dispositif 200 permettra également la mise en position d'obturation partielle (figure 3) du premier volet 216 lorsque le signal délivré au calculateur 300 par le moyen sensible à la vitesse 302 indique une vitesse du véhicule à laquelle la valeur du débit dynamique (C1) est égale à une valeur de consigne (D1, D2) du débit F. En outre, une tension approprié d'alimentation du moteur 208a du pulseur devra également être déterminée par le programme du calculateur, grâce à laquelle la perte de charge du débit dynamique due au passage du volet 216 en position d'obturation partielle est compensée afin d'obtenir le débit de consigne choisi.

Par conséquent, on a obtenu conformément à l'invention un dispositif de climatisation économique qui permet d'ajuster le débit de façon simple et précise, tout en réduisant le plus possible la consommation d'énergie électrique du pulseur, quelle que soit la vitesse du véhicule.

## Revendications

1. Dispositif de climatisation (200) d'un habitacle (106) de véhicule automobile (100), du type comprenant un pulseur d'air (208) relié à différents circuits d'amenée d'air (204, 206, 214) qui débouchent sur des ouies d'aération réparties dans l'habitacle pour fournir un air conditionné suivant des valeurs de consigne, des volets de sélection (212, 216, 218) permettant l'ouverture ou l'obturation des circuits, et en particulier un premier volet (216) pouvant obturer au moins partiellement une prise d'air extérieur (104), et un calculateur (300) relié à des moyens (302) sensibles à la vitesse du véhicule et à des moyens (320) aptes à sélectionner les positions desdits volets (212, 216, 218) afin d'ajuster la valeur de consigne du débit d'air (F) suivant la vitesse du véhicule, caractérisé en ce que le calculateur (300) est raccordé en outre à un deuxième volet (218) permettant l'obturation ou l'ouverture d'un collecteur de recyclage (204), à un volet de mitigeage (212) qui dirige le flux d'air pulsé soit vers un échangeur thermique (210) soit vers une veine neutre (214) et à des capteurs disposés dans lesdits circuits, pour déterminer les valeurs de consigne correspondant au débit d'air (F) en fonction de la vitesse du véhicule et de paramètres de climatisation, en particulier la température.

2. Dispositif selon la revendication 1, caractérisé en ce que les deux premiers volets de sélection (216, 218) sont associés par des moyens de commande (320) agencés de sorte qu'en position d'ouverture ainsi qu'en position d'obturation partielle du premier volet (216) le second volet est en position d'obturation, et qu'en position d'obturation du premier volet (216) le second volet (218) est en position d'ouverture.

3. Dispositif selon la revendication 2, caractérisé en ce que les moyens de commande (320) sont constitués par deux pignons (326,328) et un pignon intermédiaire (327) partiellement dentés, le premier pignon (326) étant solidaire du premier volet (216) et pouvant venir en prise avec un premier secteur denté (329) du pignon intermédiaire (327), le second pignon (328) étant solidaire du second volet (218) et pouvant venir en prise avec un second secteur denté (330) du pignon intermédiaire, de sorte que le pignon intermédiaire (327) peut engrener soit avec l'un ou l'autre, soit avec les deux pignons partiellement dentés (326,328), simultanément.

4. Dispositif selon la revendication 3, caractérisé en ce que le pignon intermédiaire (327) est relié à un micromoteur (325) à l'aide d'une tringlerie articulée (322,323,324) de façon à être entraîné en rotation par le micromoteur (325).

5. Dispositif selon l'une des revendications 2 à 4, caractérisé en ce que les moyens de commande comprennent des organes élastiques (336,338) aptes à maintenir les volets de sélection (216,218) dans leur position d'obturation.

6. Dispositif selon la revendication 5, caractérisé en ce chaque organe élastique (336,338) est constitué par un ressort à lame fixé sur le pignon intermédiaire (327) par l'une de ses extrémités, l'autre extrémité venant en appui contre un téton (346,348) solidaire de l'un des premier et second pignons (326,328), lorsque le volet correspondant (216,218) est en position d'obturation.

7. Dispositif selon l'une quelconque des revendications 2 à 6, caractérisé en ce que le calculateur (300) comporte une mémoire dans laquelle sont emmagasinées des variations de débit d'air (F) pour les différentes valeurs de tension d'alimentation d'un moteur d'entraînement (208a) du pulseur (208), ainsi que du débit dynamique en fonction de la vitesse du véhicule, lorsque le premier volet de sélection (216) est en position d'ouverture et d'obturation partielle.

8. Dispositif selon la revendication précédente, caractérisé en ce qu'un programme de gestion emmagasiné dans la mémoire du calculateur (300) permet d'une part la mise en position d'obturation partielle du premier volet (216) lorsque la valeur du débit dynamique relative à la vitesse est égale à une valeur de consigne, et d'autre part de déterminer une tension d'alimentation du moteur du pulseur (208) qui permet d'obtenir le débit de consigne lorsque le premier volet de sélection (216) est en position d'obturation partielle.

## Claims

1. Device (200) for the air-conditioning of a passenger space (106) of an automotive vehicle (100), of the type comprising an air impeller (208) connected to different air feed circuits (204, 206, 214) which open on ventilation ears distributed in the passenger space to supply an air conditioned according to prescribed set values, selection flaps (212, 216, 218) permitting the opening or the closing of the circuits and in particular a first flap (216) which may shut off at least partially an outer air inlet (104) and a computer (300) connected to means (302) sensitive to the speed of the vehicle and to means (320) adapted to select the positions of the said flaps (212, 216, 218) in order to adjust the prescribed set value of the air flow rate (F) according to the speed of the vehicle, characterized in that the computer (300) is moreover connected to a second flap (218) permitting the closing or the opening of a recycling manifold (204), to a mitigating flap (212) which directs the pulsed air flux either towards a heat exchanger (210) or towards a neutral jet stream (214) and to sensors disposed in the said circuits to determine the set values corresponding to the air flow rate (F) in accordance with the speed of the vehicle and of air-conditioning parameters, in particular the temperature.

2. Device according to claim 1, characterized in that the two first selection flaps (216, 218) are associated by control means (320) arranged so that in the opening position as well as in the partial closing position of the first flap (216), the second flap is in the closing position and that in the closing position of the first flap (216), the second flap (218) is in the opening position.

3. Device according to claim 2, characterized in that the control means (320) are constituted by two pinions (326, 328) and an intermediate pinion (327) which are partially toothed, the first pinion (326) being made fast to the first flap (216) and being adapted to engage a first toothed sector (329) of the intermediate pinion (327), the second pinion (328) being made fast to the second flap (218) and being adapted to engage a second toothed sector (330) of the intermediate pinion so that the intermediate pinion (327) may mesh with either one or with both partially toothed pinions (326, 328) simultaneously.

4. Device according to claim 3, characterized in that the intermediate pinion (327) is connected to a micromotor (325) with the assistance of an articulated linkage (322, 323, 324) so as to be driven for rotation by the micromotor (325).

5. Device according to one of claims 2 to 4, characterized in that the control means comprise elastic members (336, 338) adapted to hold the selection flaps (216, 218) in their closing position.

6. Device according to claim 5, characterized in that each elastic member (336, 338) is constituted by a leaf spring fastened onto the intermediate pinion (327) with one of its ends, the other end being caused to bear upon a pin (346, 348) made fast to one of the first and second pinions (326, 328) when the corresponding flap (216, 218) is in the closing position.

7. Device according to any one of claims 2 to 6, characterized in that the computer (300) comprises a storage into which are stored air flow rate variations (F) for the different feed voltage values of a motor (208a) driving the impeller (208) as well as of the dynamic flow rate in accordance with the speed of the vehicle, when the first selection flap (216) is in the opening and partially closing position.

8. Device according to the foregoing claim, characterized in that a management program stored in the storage of the computer (300) permits on the one hand the putting of the first flap (216) into the partial closing position when the value of the dynamic flow rate relative to the speed is equal to a prescribed set value and on the other hand to determine a feed voltage of the motor of the impeller (208) which permits to obtain the prescribed set flow rate when the first selection flap (216) is in the partial closing position.

## Patentansprüche

1. Vorrichtung (200) zur Klimatisierung eines Passagierraumes (106) eines Kraftfahrzeuges (100), derjenigen Gattung mit einem mit verschiedenen Luftzufuhrkreisläufen (204, 206, 214) verbundenen Lufttreibglied (208), die durch in dem Passagierraum verteilte Lüftungsschlitze ausmünden, um eine gemäss Sollwerten behandelte Luft zu liefern, das Öffnen oder das Schliessen der Kreisläufe gestattenden Auswahlklappen (212, 216, 218) und insbesondere einer ersten Klappe (216), die einen Aussenlufteinlass (104) wenigstens teilweise verschliessen kann und einem Rechner (300), der an gegen die Geschwindigkeit des Fahrzeuges empfindliche Mittel (302) und an für die Auswahl der Stellungen der besagten Klappen (212, 216, 218) geeignete Mittel (320) angeschlossen ist, um den Sollwert der Luftdurchsatzmengenleistung (F) gemäss der Geschwindigkeit des Fahrzeuges einzustellen, dadurch gekennzeichnet, dass der Rechner (300) ausserdem an eine zweite das Verschliessen oder das Öffnen eines Rückführungssammelrohres (204) gestattende Klappe (218), an eine Mischklappe (212), die den angetriebenen Luftfluß entweder zu einem Wärmetauscher (210) hin oder zu einem neutralen Strom (214) hin leitet und an in den besagten Kreisläufen angeordnete Meßwertgeber angeschlossen ist, um die der Luftdurchsatzmengenleistung (F) entsprechenden Sollwerte in Abhängigkeit von der Geschwindigkeit des Fahrzeuges und von Klimatiesierungsparametern, insbesondere der Temperatur zu bestimmen.

2. Vorrichtung nach Anspruch 1, dadurch gekennzeichnet, dass die beiden ersten Auswahlklappen (216, 218) durch Steuermittel (320) zugeordnet sind, die derart angeordnet sind, dass in der Offenstellung sowie in der Teilverschlußstellung der ersten Klappe (216), die zweite Klappe in der Verschlußstellung ist und dass in der Verschlußstellung der ersten Klappe (216), die zweite Klappe (218) in der Offenstellung ist.

3. Vorrichtung nach Anspruch 2, dadurch gekennzeichnet, dass die Steuermittel (320) durch zwei Ritzel (326, 328) und ein Zwischenritzel (327), die teilweise gezahnt sind, gebildet werden, wobei das erste Ritzel (326) mit der ersten Klappe (216) fest verbunden ist und in Eingriff mit einem ersten gezahnten Sektor (329) des Zwischenritzels (327) kommen kann, wobei das zweite Ritzel (328) mit der zweiten Klappe (218) fest verbunden ist und mit einem zweiten gezahnten Sektor (330) des Zwischenritzels in Eingriff kommen kann, so dass das Zwischenritzel (327)entweder mit dem einen oder dem anderen Ritzel oder mit den beiden teilweise gezahnten Ritzeln (326, 328) gleichzeitig kämmen kann.

4. Vorrichtung nach Anspruch 3, dadurch gekennzeichnet, dass das Zwischenritzel (327) mit einem Mikromotor (325) mit Hilfe eines Gelenkgestänges (322, 323, 324) verbunden ist, um durch den Mikromotor (325) zum Drehen angetrieben zu werden.

5. Vorrichtung nach einem der Ansprüche 2 bis 4, dadurch gekennzeichnet, dass die Steuermittel elastische Glieder (336, 338) umfassen, die geeignet sind, die Auswahlklappen (216, 218) in ihrer Verschlußstellung zu halten.

6. Vorrichtung nach Anspruch 5, dadurch gekennzeichnet, dass jedes elastische Glied (336, 338) durch eine an dem Zwischenritzel (327) mit einem ihre Enden befestigte Blattfeder gebildet wird, wobei das andere Ende an einem mit einem des ersten und zweiten Ritzels (326, 328) fest verbundenen Stift (346, 348) zur Abstützung kommt, wenn die entsprechende Klappe (216, 218) in der Verschlußstellung ist.

7. Vorrichtung nach irgendeinem der Ansprüche 2 bis 6, dadurch gekennzeichnet, dass der Rechner (300) einen Speicher aufweist, in welchem die Änderungen der Luftdurchsatzmengenleistung (F) für die verschiedenen Werte der Speisespannung eines Motors (208a) des Lufttreibgliedes (208) sowie der dynamischen Durchsatzleistung in Abhängigkeit von der Geschwindigkeit des Fahrzeuges eingespeichert werden, wenn die erste Auswahlklappe (216) in der Offen- und Teilverschlußstellung ist.

8. Vorrichtung nach dem vorangehenden Anspruch, dadurch gekennzeichnet, dass ein in dem Speicher des Rechners (300) eingespeichertes Betriebsführungsprogramm einerseits das Bringen der ersten Klappe (216) in die Teilverschlußstellung, wenn der Wert der dynamischen Durchsatzmengenleistung in bezug auf die Geschwindigkeit gleich einem Sollwert ist und andererseits die Bestimmung einer Speisespannung des Motors des Lufttreibgliedes (208) gestattet, die die Erzielung der Durchsatzmengensolleistung, wenn die erste Auswahlklappe (216) in der Teilverschlußstellung ist, gestattet.
